# EUROPÄISCHE PATENTANMELDUNG

(11) **EP 2 466 168 A1**
(43) Veröffentlichungstag der Anmeldung: **20.06.2012**
(21) Anmeldenummer: 10195367.7
(22) Anmeldetag: 16.12.2010
(51) Int. Cl.: F16H 3/72, F16H 47/04, B60K 17/28

(54) **Einrichtung zur Aufteilung der Antriebsleistung**

(71) Anmelder: VDS Getriebe GmbH, 4493 Wolfern (AT)
(72) Erfinder: Aitzetmüller, Heinz, 4817, St. Konrad (AT); Stöckl, Dieter, 4400, St. Ulrich (AT); Hörmann, Gerhard, 4723, Natternbach (AT)
(74) Vertreter: Staudt, Armin Walter

(57) **Zusammenfassung**

Die Erfindung betrifft eine Einrichtung zur Aufteilung der Antriebsleistung einer Verbrennungskraftmaschine auf einen Fahrzeugantrieb und einen oder mehrere Nebenantriebe, wobei die Eingangswelle (1) über eine oder mehrere Stirnradstufen und eine lösbare Kupplung (7) mit dem Nebenabtrieb (8) verbunden und der Nebenabtrieb (8) bei geschlossener Kupplung (7) aktiviert ist. Sie zeichnet sich dadurch aus, dass die Abtriebswelle (3) zum Fahrzeugantrieb mit einem Überlagerungsgetriebe (17) in Wirkverbindung steht, welches einen direkten Durchtrieb von der Eingangswelle (1) zur Abtriebswelle (3) ermöglicht, wobei der Drehimpuls der Eingangswelle (1) über eine Stirnradstufe (16) an ein Hohlrad (18) des Überlagerungsgetriebes (17) und von diesem Hohlrad (18) über Planetenräder (20) an einen Planetenträger (21) und vom Planetenträger (21) über eine Stirnradstufe (24) an die Abtriebswelle (3) übertragen wird.

## Beschreibung

Die vorliegende Erfindung betrifft eine Einrichtung zur Aufteilung der Antriebsleistung einer Verbrennungskraftmaschine auf einen Fahrzeugantrieb und einen oder mehrere Nebenantriebe, wobei die Drehzahl des Fahrantriebes stufenlos einstellbar ist.

Diese Einrichtung - im Folgenden auch kurz als "Getriebe" bezeichnet - ist für spezielle Einsatzfahrzeuge, wie Löschfahrzeuge, insbesondere Flughafenlöschfahrzeuge, aber auch für Straßenkehrmaschinen, Betonmischfahrzeuge, Schneefräsfahrzeuge und ähnliche Anwendungen geeignet, bei denen die Fahrzeuggeschwindigkeit unabhängig von der Motordrehzahl in definierten, insbesondere sehr geringen Geschwindigkeitsbereichen stufenlos einstellbar sein soll. Mit der vorliegenden Erfindung kann die Fahrzeuggeschwindigkeit optimal auf die jeweils herrschenden Arbeitsbedingungen abgestimmt werden.

### Stand der Technik:

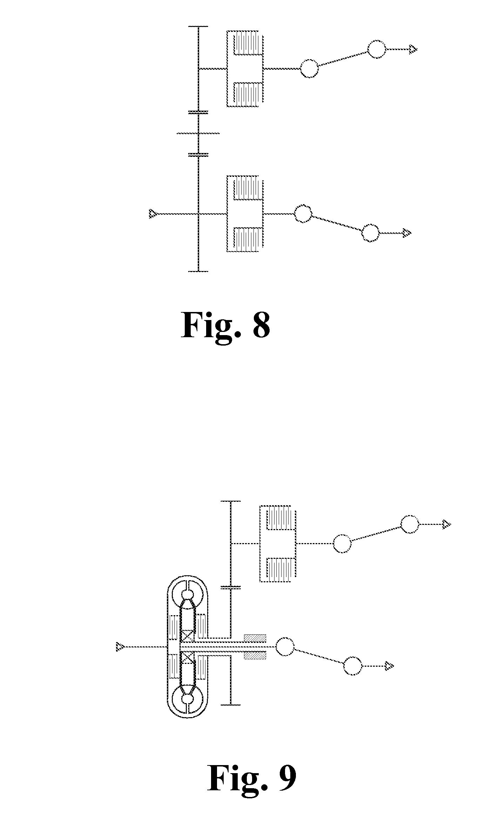

Aus dem Stand der Technik sind mehrere Systeme zur Aufteilung der Antriebsleistung bekannt. Sie werden üblicherweise zwischen dem Verbrennungsmotor und dem Getriebe zum Fahrzeugantrieb eingebaut und leiten einen Teil der Motorleistung zu einem oder mehreren Nebenverbrauchern, wie beispielsweise Pumpen oder andere Aggregate ab. So zeigt das "Power Divider System nach Cushman", das in **Figur 8** schematisch und vereinfacht wiedergegeben ist, eine mit einem Verbrennungsmotor verbundene Eingangswelle, dessen Drehimpuls direkt oder über eine Stirnradstufe zu zwei Kupplungen abgeleitet wird, von denen eine zur Antriebswelle des Fahrzeuges und die zweite zur Antriebswelle eines Aggregates, beispielsweise einer Pumpe führt.

Wie - ohne weitere Erläuterung leicht erkennbar - ist dieses Prinzip nicht geeignet, um die Fahrzeuggeschwindigkeit bei hoher Leistung zur Nebenabtriebswelle unabhängig von der Motordrehzahl in definierten, insbesondere sehr geringen Geschwindigkeitsbereichen zu betreiben oder stufenlos einzustellen. Die Abtriebswellendrehzahl zum Fahrzeuggetriebe steht beim System nach Cushman immer in einem definierten Verhältnis zur Antriebsdrehzahl. Soll das Fahrzeug bei sehr geringer Geschwindigkeit und hoher Motordrehzahl betrieben werden, so kann dies nur geschehen, indem die Kupplung zum Fahzeuggetriebe schleifend betrieben oder bei Vorhandensein eines Drehmomentwandlers das Fahrzeug über die Betriebsbremse gebremst wird. Alternativ kann die Drehzahl des Verbrennungsmotors reduziert werden, was sich auch auf de Drehzahl der Abtriebswelle zum Nebenaggregat, beispielsweise einer Löschwasserpumpe auswirkt.

Eine anderes bekanntes Systeme zur Aufteilung der Antriebsleistung, gebaut von der Firma Twin Disc, ist in **Figur 9** schematisch und vereinfacht wiedergegeben. Auch bei diesem System ist man wieder mit dem oben geschilderten Problem konfrontiert, dass die Aggregatleistung in direktem Verhältnis steht zur Motordrehzahl, welche wiederum in Zusammenhang steht mit der Fahrzeuggeschwindigkeit. Demnach ist es auch hier nicht möglich, dass beispielsweise die Motordrehzahl hoch ist, damit die Löschpumpe mit hoher Ausstoßleistung betrieben werden kann und gleichzeitig das Fahrzeug über einen längeren Zeitraum im Schritttempo bewegt wird.

### Technische Aufgabenstellung

Die in den beiden Figuren 8 und 9 dargestellten Lösungen sind in der Praxis auch bei Löschfahrzeugen zu finden. Sie sind für die temporäre Zuschaltung von Nebenabtriebswellen durchaus geeignet. Der wesentliche Nachteil liegt jedoch darin, dass die Abtriebswellendrehzahl zum nachgeschalteten Fahrzeugantrieb nur über schleifende Kupplungen beeinflusst werden kann. Dies hat jedoch zur Folge, dass ein Fahren des Fahrzeuges bei sehr langsamer Geschwindigkeit und gleichzeitig hoher Motordrehzahl unter Verwendung von nachgeschalteten automatischen Getrieben oder Synchrosplitgetrieben nur sehr eingeschränkt oder gar nicht möglich ist. Die Mindestgeschwindigkeit ist durch die erforderliche Motordrehzahl zum Antrieb der Nebenaggregate durch die Übersetzung im niedrigsten Gang und gegebenenfalls durch einen Drehmomentwandler festgelegt.

Die vorliegende Erfindung stellt sich daher die Aufgabe, eine Einrichtung zur Aufteilung der Antriebsleistung einer Verbrennungskraftmaschine auf einen Fahrzeugantrieb und einen oder mehrere Nebenantriebe zu schaffen, die die genannten Mängel der bekannten Einrichtungen weitgehend vermeidet und einen einfachen, in seiner Herstellung kostengünstigen Aufbau besitzt. Mit der Erfindung soll es insbesondere ermöglicht werden, bei hoher Motordrehzahl das Fahrzeug auch bei sehr geringer Geschwindigkeit zu fahren, ohne die Fahrzeuggeschwindigkeit nur über schleifende Kupplungen zu beeinflussen.

### Allgemeine Darstellung der Erfindung

Diese Aufgabe wird ausgehend von einer Einrichtung gemäß der eingangs genannten Gattung erfindungsgemäß dadurch gelöst, dass die Abtriebswelle zum Fahrzeugantrieb mit einem Überlagerungsgetriebe in Wirkverbindung steht, welches einen direkten Durchtrieb von der Eingangswelle zur Abtriebswelle ermöglicht, wobei der Drehimpuls der Eingangswelle über eine Stirnradstufe an ein Hohlrad des Überlagerungsgetriebes und von diesem Hohlrad über Planetenräder an einen Planetenträger und vom Planetenträger über eine Stirnradstufe an die Abtriebswelle übertragen wird.

### Ausführungsbeispiel

Bevorzugte Ausführungsformen der erfindungsgemäßen Einrichtung sind in den Figuren schematisch dargestellt und werden nachfolgend anhand dieser Figuren näher beschrieben. Darin zeigt in schematischer und vereinfachter Darstellung:
**Figur 1** eine erste Ausführungsform eines erfindungsgemäßen Getriebes,
**Figuren 2 bis 7** jeweils einen zu Figur 1 alternativen Aufbau eines erfindungsgemäßen Getriebes,
**Figur 8** ein Getriebe aus dem Stand der Technik, und
**Figur 9** ein weiteres Getreibe aus dem Stand der Technik

Die in diesen Figuren dargestellten Einrichtungen erheben keinen Anspruch auf vollständige Abbildung aller möglichen Alternativen, jede weitere alternative Ausführung ist für den Fachmann jedoch aus diesen Abbildungen heraus leicht nachvollziehbar.

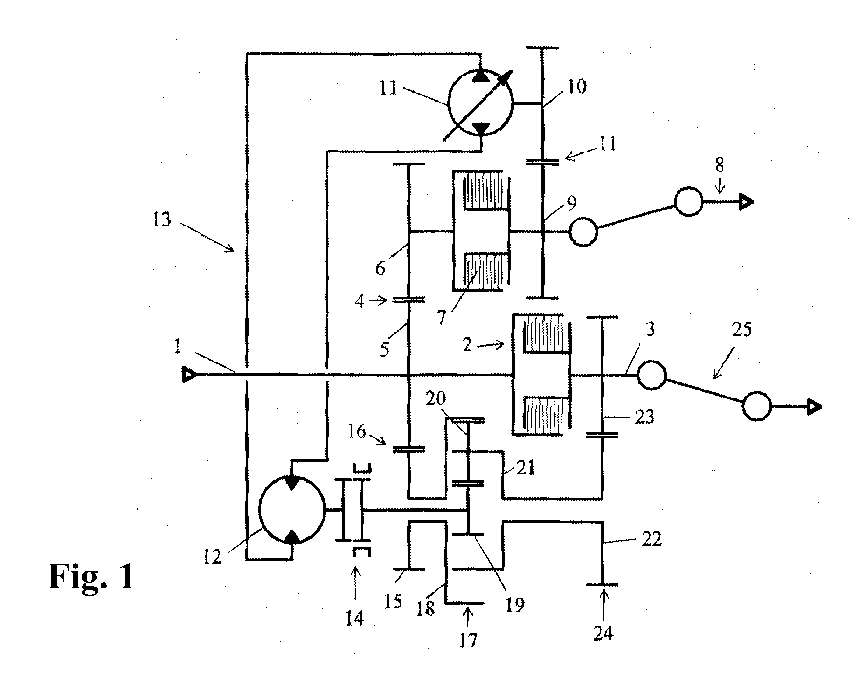

Wie aus **Fig. 1** ersichtlich, weist die erfindungsgemäße Einrichtung zur Aufteilung der Antriebsleistung einer Verbrennungskraftmaschine auf einen Fahrantrieb und einen oder mehrere Nebenantriebe eine Eingangswelle 1 und eine Abtriebswelle 3 zum Fahrzeuggetriebe auf, welche über eine Synchronisiereinrichtung 2 miteinander verbindbar sind. Im normalen Fahrbetrieb, ohne Aktivierung des Nebenabtriebs 8, ist die Synchronisiereinrichtung 2 geschlossen und das Drehmoment wird von der Getriebeeingangswelle 1 unmittelbar an die Abtriebswelle 3 übertragen.

Alternativ dazu ist die Eingangswelle 1 mit der Abtriebswelle 3 zum Fahrzeuggetriebe über ein Überlagerungsgetriebe 17 verbunden, wobei das Hohlrad 18 über eine Stirnradstufe 16 mit der Getriebeeingangswelle 1 gekoppelt ist und entsprechend der Drehzahl der Getriebeeingangswelle 1 rotiert.

Das Sonnenrad 19 des Summierplanetengetriebes wird über einen Hydromotor 12 angetrieben, welcher im geschlossenen Kreislauf mit einer Hydraulikpumpe 11 verbunden ist. Die Hydraulikpumpe 11 wird durch Zuschaltung des Nebenabtriebs 8 durch Schließen der Kupplung 7 aktiviert.

Der Abtrieb vom Summierplanetengetriebe erfolgt über den Planetenträger 21 und von dort über eine Stirnradstufe 24 zur Abtriebswelle 3. Die Drehzahl der Abtriebswelle 3 zum Fahrzeuggetriebe kann innerhalb der Drehzahl- und Leistungsgrenzen des hydrostatischen Variatorsystems 13 stufenlos an die jeweiligen Bedingungen angepasst werden.

In den Figuren 1 bis 7 sind hydrostatische Variatorsysteme 13 dargestellt. Die Ausführungen gelten aber genauso für geeignete alternative Variatorsysteme, in welchen eine kontinuierliche Veränderung der Abtriebsdrehzahl des Variatorsystems möglich ist. Darunter fallen beispielsweise alle hydrostatischen Variatoren mit einer Verstellpumpe und einem Konstantmotor oder mit einer Verstellpumpe und einem Verstellmotor, beispielsweise in der Form von Axialkolbenmaschinen oder in der Form von Flügelzelleneinheiten, aber auch elektrische Variatoren, Riemen- oder Kettenvariatoren und viele andere mehr.

Der Nebenabtrieb 8 wird bei Bedarf über eine zuschaltbare Kupplung 7 an die Getriebeeingangswelle 1 gekoppelt, wodurch im Bedarfsfall das gesamte Drehmoment der Getriebeeingangswelle 1 auf den Nebenabtrieb 8 übertragen wird.

Im normalen Fahrbetrieb des Fahrzeuges wird der Kraftfluss von der Getriebeeingangswelle 1 zur Abtriebswelle 3 und von hier zum Fahrzeuggetriebe über die Synchronisiereinrichtung 2 geschlossen. Die Verbindung 14 des Hydromotors 12 mit dem Sonnenrad 19 des Summierplanetengetriebes ist geöffnet, ebenso wie die Kupplung 7, wodurch keine Leistung an den Nebenabtrieb 8 übertragen wird. Infolge der direkten Verbindung der Getriebeeingangswelle 1 mit der Abtriebswelle 3 wird die gesamte Antriebsleistung mit minimalen Verlusten übertragen. Die Komponenten des Summierplanetengetriebes und der verbundenen Stirnradstufen rotieren ohne Last entsprechend den gewählten Übersetzungsverhältnissen.

Im kombinierten Fahrbetrieb wird zusätzlich zur geschlossenen Synchronisiereinrichtung 2 auch die Kupplung 7 geschlossen. Die Verbindung 14 bleibt offen. Die Fahrzeuggeschwindigkeit wird durch die Drehzahl des Verbrennungsmotors und die Übersetzung des eingelegten Ganges im nicht dargestellten, der Abtriebswelle 3 folgenden Getriebe bestimmt.

Soll die Fahrzeuggeschwindigkeit nun angepasst werden bei unveränderter Kraftübertragung zum Nebenabtrieb 8, so wird im Variatorsystem 13 in der Hydropumpe 11 durch eine entsprechende Steuereinrichtung die Fördermenge des Druckmediums soweit beeinflusst, dass an der Verbindung 14 Synchrondrehzahl zwischen der Abtriebswelle des Hydromotors 12 und der Welle zum Sonnenrad 19 besteht.

Nachdem die Synchrondrehzahl erreicht ist, wird mittels der Verbindung 14 das Sonnenrad 19 mit dem Hydromotor 12 verbunden und anschließend die direkte Verbindung zwischen Getriebeeingangswelle 1 und Abtriebswelle 3 durch öffnen des Synchrongetriebes 2 unterbrochen. Ab diesem Zeitpunkt erfolgt die Leistungsübertragung vom Verbrennungsmotor zum Fahrzeuggetriebe ausschließlich über das Überlagerungsgetriebe 17, wodurch die Drehzahl der Abtriebswelle 3 durch Beeinflussung der Drehzahl des Sonnenrades 19 über das Variatorsystem 13 stufenlos eingestellt werden kann.

Die Drehzahl der Abtriebswelle 3 kann durch entsprechende Anpassung der Drehzahl des Hydromotors 12 über die Einstellung der Hydropumpe 11 bei konstanter Drehzahl der Getriebeeingangswelle 1 stufenlos an die jeweiligen Einsatzbedingungen angepasst werden. Dadurch wird es möglich, das Fahrzeug auch mit Kriechgeschwindigkeit fort zu bewegen und gleichzeitig den Verbrennungsmotor mit voller Drehzahl zu betreiben, wodurch an der Abtriebswelle zum Nebenaggregat die volle Leistungswirkung ermöglicht wird.

Mit diesem System ist auch die Darstellung einer Overdrive- Funktion möglich, bei dem die Drehzahl der Abtriebswelle 3 gegenüber der Drehzahl der Getriebeeingangswelle 1 erhöht wird. Voraussetzung dafür ist aber, dass die Leistung des Verbrennungsmotors ausreichend ist und das Sonnenrad 19 mit ausreichender Drehzahl gleichgerichtet mit dem Hohlrad 18 rotiert.

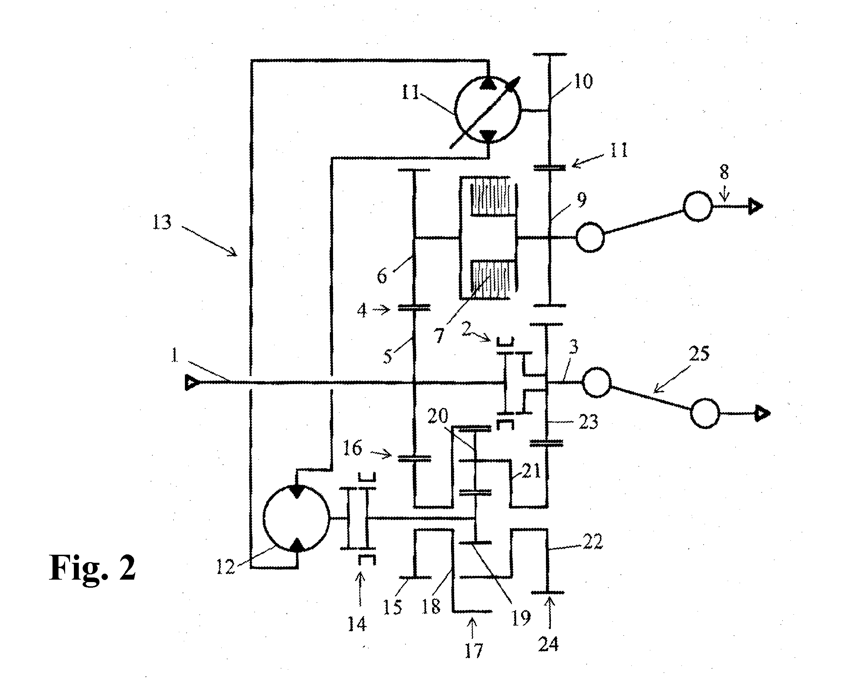

Eine alternative Ausführung ist aus **Fig. 2** ersichtlich. Der Aufbau und die Betriebsweise entsprechen im Wesentlichen dem Aufbau und der Betriebsweise der Einrichtung nach **Fig. 1****.** Hier wird lediglich die Synchronisiereinrichtung 2 durch eine zu Verbindung 14 analoge Verbindung ersetzt. Diese Ausführungsform eignet sich besonders für Automatikgetriebe, die der Abtriebswelle 3 nachgeschaltet sind.

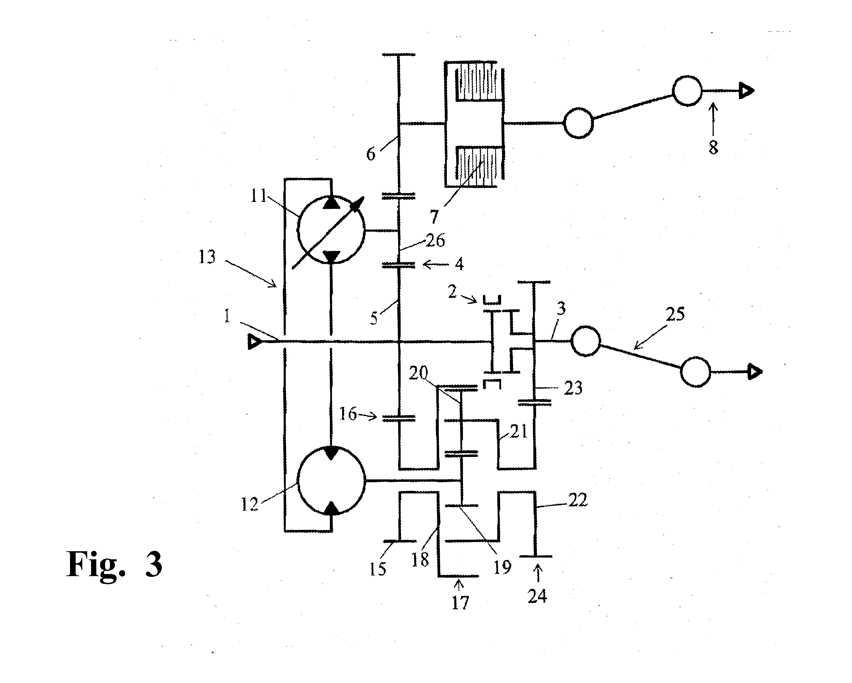

In der Ausführung der Erfindung nach **Fig. 3** besteht eine ständige Verbindung der Getriebeeingangswelle 1 zur Hydropumpe 11 und eine ständige Verbindung zwischen dem Hydromotor 12 und dem Sonnenrad 19. In der dargestellten Ausführungsform ist die Hydropump über ein Zwischenrad 26 angetrieben, in analoger Weise kann es an das Zahlrad 6 gekoppelt sein. Bei geschlossener Synchronisiereinrichtung 2 wird die Hydropumpe derart geregelt, dass im hydrostatischen Kreis nur sehr geringer Differenzdruck aufgebaut wird. Der Vorteil der in **Fig. 3** dargestellten Anordnung ist, dass der Abtrieb zum Fahrzeugantrieb unabhängig von der Drehzahl des Antriebsmotors eingestellt werden kann, auch wenn der Nebenabtrieb nicht zugeschaltet wurde.

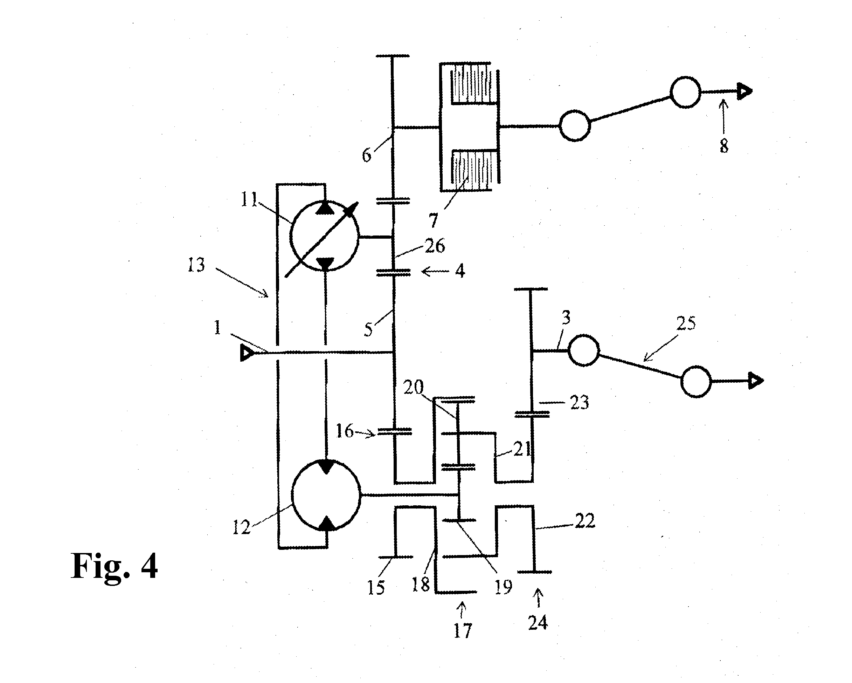

Eine alternative, kostengünstigere Ausführung zum Ansatz entsprechend der Ausführung nach **Fig. 3** ist in **Fig. 4** gezeigt. Hier wird die Verbindung zwischen dem Anriebsmotor und dem Fahrzeugantrieb immer über den Summierplanetensatz 17 hergesellt. Beim Antrieb des Fahrzeuges wird demnach über den Variator 13 ständig Druck aufgebaut. Diese Alternative hat sich als besonders vorteilhaft beim Einsatz in Fahrzeugen mit hohen Betriebszeiten bei niedrigen Fahrzeuggeschwindigkeiten wie zum Beispiel bei Kehrmaschinen erwiesen.

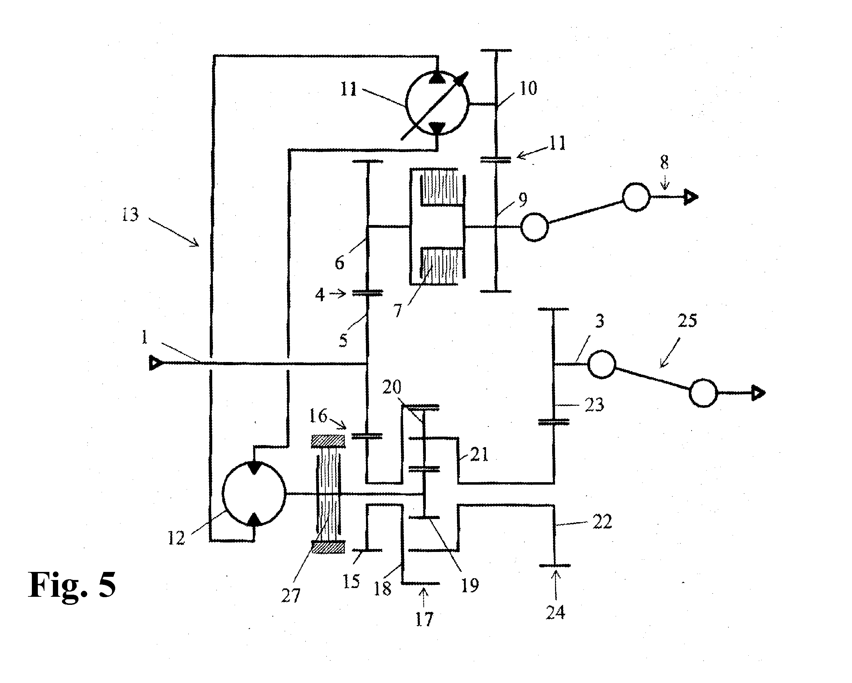

Eine weitere alternative Ausführung ist in den **Fig. 4** **und** **5** dargestellt. Hier besteht keine direkt schaltbare Verbindung zwischen der Getriebeeingangswelle 1 und der Abtriebswelle 3. Bei deaktivem Nebenabtrieb 8 zum Nebenaggregat erfolgt der Abtrieb unbeeinflusst vom Variatorsystem 13 über den Summierplanetensatz 17. Der Nebenabtrieb 8 ist erst aktiv, wenn die Kupplung 7 geschlossen wird. Sobald die Hydraulikpumpe 11 über die Kupplung 7 zugeschaltet ist, wird im hydrostatischen Kreis Druck aufgebaut und die Bremse 27 wird geöffnet. Für diese Konstruktion ist es erforderlich, das Sonnenrad 19 bei abgeschaltetem Nebenabtrieb über die Bremse 27 mit dem Getriebegehäuse zu verbinden und somit den Kraftfluss zum Fahrzeugantrieb zu schließen.

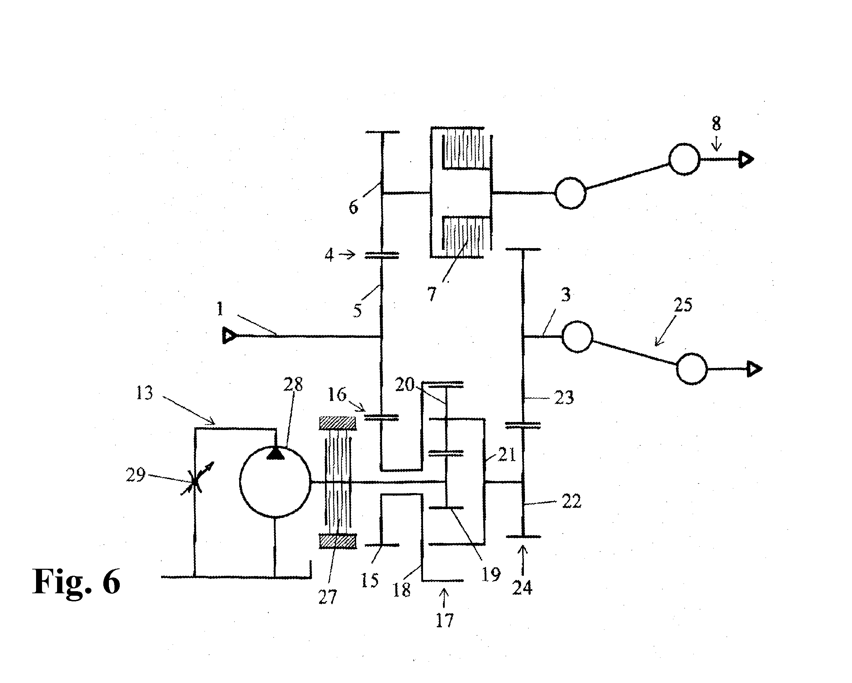

Die in **Fig. 6** dargestellte alternative Ausführungsform zeigt eine erfindungsgemä-βe Einrichtung, ähnlich zu jener aus den **Fig. 1 bis 5**, wobei jedoch die Variatoreinheit 13 durch eine einfache Pumpe 28 ersetzt ist, die einen Ölstrom aus einer Ölvorlage gegen eine regelbare Drossel 29 pumpt. Die Fahrzeuggeschwindigkeit wird bei offener Bremse 27 durch die Drosselregelung beeinflusst. Auch hier besteht keine direkt schaltbare Verbindung zwischen der Getriebeeingangswelle 1 und der Abtriebswelle 3. Wenn die volle Drehzahl der Getriebeeingangswelle 1 für den Fahrantrieb benötigt wird, also bei deaktivem Nebenabtrieb 8 zum Nebenaggregat, erfolgt der Impulsübertrag zur Abtriebswelle 3 direkt über das Planetensystem 17 bei geschlossener Bremse 27.

Der Nebenabtrieb 8 wird aktiviert durch Schließen der Kupplung 7. Bei Bedarf wird die Fahrzeuggeschwindigkeit reduziert, indem die Bremse 27 geöffnet wird. Die mit dem Summierplanetensatz 17 in Wirkverbindung stehende Hydropumpe 28, welche gegen die Drossel 29 arbeitet, wird verwendet, um die Drehzahl der Abtriebswelle 3 zu beeinflussen. Auf diese Weise wird die Geschwindigkeit des Fahrzeugs leichter und über eine große Betriebsdauer reduzierbar im Vergleich zu einer Lamellenkupplung.

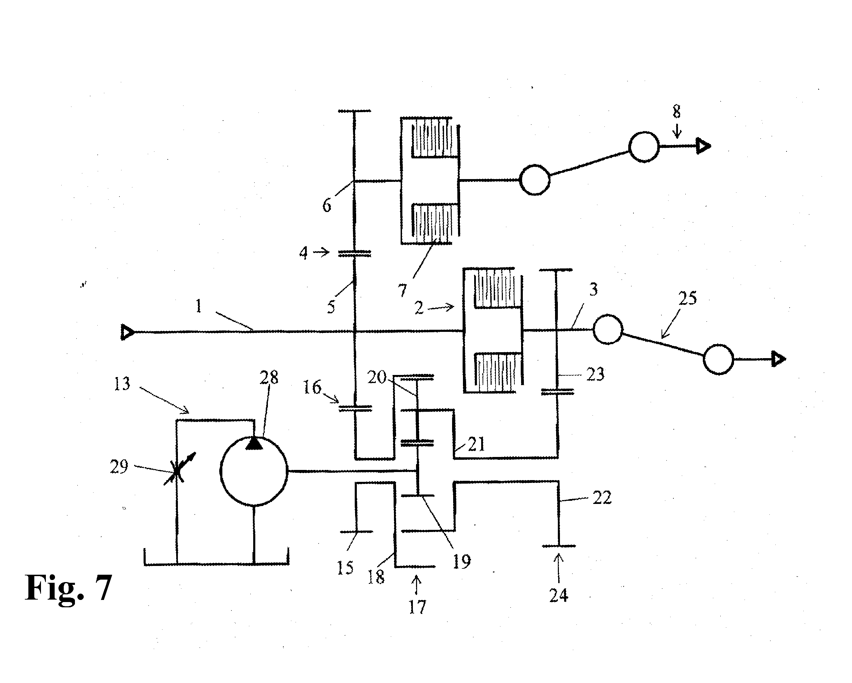

**Fig. 7** zeigt einen weiteren alternativen Aufbau der erfindungsgemäßen Einrichtung, wie er typisch für Feuerwehrautos zum Einsatz kommen kann. Bei dieser Variante wird bei normaler Fahrt die Abtriebswelle 3 zum Fahrzeugantrieb direkt über die Synchronisiereinrichtung 2 mit der Getriebeeingangswelle 1 gekoppelt. Zur Reduktion der Drehzahl der Abtriebswelle 3 wird die Synchronisiereinrichtung 2 geöffnet und mittels der Drehzahl des Sonnenrades 19 im Summierplanetensatz 17 die Drehzahl der Abtriebswelle 3 eingestellt. Die Drehzahl der Hydropumpe 28 wird durch Regelung der Durchflussmenge an der Drossel 29 eingestellt. Die Übersetzungen in den Stirnradstufen 16 und 24, sowie im Summierplanetensatz 17 sind so gewählt, dass bei geschlossener Synchronisiereinrichtung 2 die Drehzahl am Sonnenrad 19 und somit an der Hydropumpe 28 nahe Null ist.

Die in den **Fig. 6** **und** **7** gezeigten Ausführungen zeichnen sich besonders durch ihre kostengünstige Konstruktion aus. Alternativ zu der dargestellten Hydropumpe 28 ist die Verwendung eines drehzahlgeregelten elektrischen Generators denkbar.

Die mit dieser Erfindung hauptsächlich erzielbaren Vorteile sind:
- Es können bestehende Fahrzeugkonfigurationen übernommen werden und serienmäßig verfügbare Getriebekomponenten bleiben in Verwendung.
- Bei deaktivem Nebenabtrieb 8 zum Nebenaggregat wird die gesamte Antriebsleistung auf direktem Weg zum Fahrzeugantrieb abgeleitet.
- Die Drehzahl der Abtriebswelle 3 zum Fahrzeugantrieb kann innerhalb der Drehzahl- und Leistungsgrenzen des Variatorsystems 13 stufenlos an die geforderten Bedingungen angepasst werden. Dadurch wird es ermöglicht, die Fahrzeuggeschwindigkeit ohne schleifende Kupplungen zu beeinflussen.
- Der Verbrennungsmotor kann entsprechend den Anforderungen der Nebenverbraucher in den optimalen Drehzahlbereichen betrieben werden.
- Der Gesamtwirkungsgrad ist sehr gut, auch bei Betrieb des Fahrzeugantriebs über das Verzweigungsgetriebe durch die geringe Leistungsübertragung über das Variatorsystem 13. Damit verbunden können die hydrostatischen, elektrischen oder mechanischen Variatorkomponenten klein dimensioniert werden.

## Patentansprüche

1. Einrichtung zur Aufteilung der Antriebsleistung einer Verbrennungskraftmaschine auf einen Fahrzeugantrieb und einen oder mehrere Nebenantriebe, wobei die Eingangswelle (1) über eine oder mehrere Stirnradstufen und eine lösbare Kupplung (7) mit dem Nebenabtrieb (8) verbunden und der Nebenabtrieb (8) bei geschlossener Kupplung (7) aktiviert ist, **dadurch gekennzeichnet, dass** die Abtriebswelle (3) zum Fahrzeugantrieb mit einem Überlagerungsgetriebe (17) in Wirkverbindung steht, welches einen direkten Durchtrieb von der Eingangswelle (1) zur Abtriebswelle (3) ermöglicht, wobei der Drehimpuls der Eingangswelle (1) über eine Stirnradstufe (16) an ein Hohlrad 18 des Überlagerungsgetriebes (17) und von diesem Hohlrad (18) über Planetenräder (20) an einen Planetenträger (21) und vom Planetenträger (21) über eine Stirnradstufe (24) an die Abtriebswelle (3) übertragen wird.

2. Einrichtung nach Anspruch 1, **dadurch gekennzeichnet, dass** eine Synchronisiereinrichtung (2) zwischen der Eingangswelle (1) und der Abtriebswelle (3) vorhanden ist und bei geschlossener Synchronisiereinrichtung (2) die Komponenten des Überlagerungsgetriebes (17) entsprechend den gewählten Übersetzungsverhältnissen rotieren.

3. Einrichtung nach Anspruch 1 oder 2, **dadurch gekennzeichnet, dass** der Drehimpuls von der Eingangswelle (1) der Brennkraftmaschine bei geschlossener Synchronisiereinrichtung (2) direkt zum Fahrzeugabtrieb (3) und bei geöffneter oder nicht vorhandener Synchronisiereinrichtung (2) über das Überlagerungsgetriebe (17) zur Abtriebswelle (3) geleitet wird, wobei die Drehzahl der Abtriebswelle (3) durch ein Variatorsystem (13) mit hydrostatisch-mechanischer oder elektrisch-mechanischer Leistungsverzweigung stufenlos und unabhängig von der Drehzahl der Eingangswelle (1) einstellbar ist.

4. Einrichtung nach Anspruch 1, 2 oder 3, **dadurch gekennzeichnet, dass** das Variatorsystem (13) über eine Verbindung (14) mit dem Sonnenrad (19) des Überlagerungsgetriebes (17) lösbar verbunden ist.

5. Einrichtung nach einem der Ansprüche 1 bis 4, **dadurch gekennzeichnet, dass** die Eingangswelle zur Hydraulikpumpe (11) des Variatorsystems (13) über eine Stirnradstufe (4) mit dem Nebenabtrieb (8) verbunden ist und nur bei geschlossener Kupplung (7) die Hydraulikpumpe (11) aktiviert ist.

6. Einrichtung nach einem der Ansprüche 1 bis 4, **dadurch gekennzeichnet, dass** die Eingangswelle zur Hydraulikpumpe (11) des Variatorsystems (13) in der Stirnradstufe zwischen der Eingangswelle (1) und der Kupplung (7) vorgesehen ist und unabhängig von der Stellung der Kupplung (7) aktiviert ist.

7. Einrichtung nach einem der Ansprüche 1 bis 6, **dadurch gekennzeichnet, dass** zwischen dem Variatorsystem (13) und dem Sonnenrad (19) des Überlagerungsgetriebes (17) eine lösbare Bremse (27) vorgesehen ist.

8. Einrichtung nach einem der Ansprüche 1 bis 7, **dadurch gekennzeichnet, dass** das Variatorsystem (13) aus einer Hydraulikpumpe (11), einem Hydromotor (12) und hydraulischen Verbindungen zwischen diesen Bauteilen, sowie einer Variatoreingangswelle und einer Variatorausgangswelle besteht.

9. Einrichtung nach einem der Ansprüche 1 bis 4 oder 7, **dadurch gekennzeichnet, dass** an Stelle des Variatorsystems (13) eine Hydropumpe (28) vorgesehen ist, welche gegen eine regelbare Drossel (29) arbeitet, wobei die Regelstellung der Drossel (29) die Drehzahl der Abtriebswelle (3) bestimmt.

10. Einrichtung nach einem der Ansprüche 1 bis 9, **dadurch gekennzeichnet, dass** die Übersetzungen im Überlagerungsgetriebe (17) und in den Stirnradstufen (16 und 24) so gewählt sind, dass die Umschaltung vom direkten Durchtrieb zwischen Eingangswelle (1) und Abtriebswelle (3) auf den leistungsverzweigten Betrieb ohne Unterbrechung der Zugkraft in Synchronpunkten erfolgt.

11. Einrichtung nach einem der Ansprüche 1 bis 10, **dadurch gekennzeichnet, dass** die Übersetzungen in den Stirnradstufen (16 und 24), sowie im Summierplanetensatz (17) so gewählt sind, dass bei geschlossener Synchronisiereinrichtung (2) die Drehzahl am Sonnenrad (19) und somit an der Hydropumpe (28) nahe Null ist.
